# EUROPEAN PATENT APPLICATION

(11) **EP 4 517 622 A1**
(43) Date of publication of application: **05.03.2025**
(21) Application number: 24193034.6
(22) Date of filing: 06.08.2024
(51) Int. Cl.: G06Q 10/10, G06Q 30/04, G06Q 40/12, G06F 40/30, G06N 20/00

(54) **MESSAGE BASED EXPENSE CAPTURE AND CLASSIFICATION**

(30) Priority: 28.08.2023 US 202318457009
(71) Applicant: SAP SE, 69190 Walldorf (DE)
(72) Inventor: MOHAPATRA, Asutosh, 69190 Walldorf (DE); SREERAMULU, Pradeep Chilamathur, 69190 Walldorf (DE); SINHA, Trisha, 69190 Walldorf (DE); SETH, Vishali, 69190 Walldorf (DE)
(74) Representative: Müller-Boré & Partner Patentanwälte PartG mbB

(57) **Abstract**

A computer-implement method can receive a text message sent from a mobile application and extract a plurality of named entities from the text message. The method can evaluate, based on the plurality of named entities, whether the text message represents a valid expenditure. Responsive to finding that the text message represents a valid expenditure, the method can classify the text message into one of multiple categories, and generate an expenditure entry including the plurality of named entities and a category to which the text message is classified into.

## Description

### BACKGROUND

Enterprise expense or expenditure management (EM) systems usually offer a suite of software and services designed to help organizations manage their travel, expenses, and invoice processes efficiently. For example, an EM software can be used to track and control employee spending, ensure compliance with expense policies, and simplify the reimbursement process. However, existing enterprise EM solutions often lack efficient and reliable ways to capture and categorize expenses. Thus, there is room for improvement of the enterprise EM systems.

### BRIEF DESCRIPTION OF THE DRAWINGS

FIG. 1 is an overall block diagram of an example computing system supporting message-based expense capture and classification.
FIG. 2 is a flowchart illustrating an example overall method for performing message-based expense capture and classification.
FIG. 3 is a flow diagram depicting an example process of message-based expense capture and classification.
FIG. 4 depicts an example use case of the disclosed technologies.
FIG. 5 is a block diagram of an example computing system in which described embodiments can be implemented.
FIG. 6 is a block diagram of an example cloud computing environment that can be used in conjunction with the technologies described herein.

### DETAILED DESCRIPTION

### Example 1 - Overview of Expense Management Solutions

Enterprise EM solutions aim to streamline and automate the processes of managing business expenses, travel bookings, and invoices. For example, an enterprise EM software can include features like travel booking, policy enforcement, approval workflows, and expense reporting. Advanced EM solutions can provide insights into spending patterns and empower organizations to make data-driven decisions for cost optimization.

However, existing EM solutions also face technical challenges. One of the technical challenges is expense capture. Nowadays, digital payment platforms (e.g., payments using debit and/or credit cards, unified payment interface (UPI), Alipay, WeChat Pay, etc.) are ubiquitous and they are considered to be safe, convenient, and sustainable. Despite the growing trend of digital payments, existing EM solutions generally do not have a mechanism to capture, in real-time, expenditures made on these digital payment platforms. As a result, users must manually create expense entries when they make digital payments. Such a manual expense creation process not only is time-consuming and error-prone, but also frequently leads to missed expense entries. Additionally, users cannot track and monitor their expenditures on the go. Organizations also face the consequences of manual expense capture. For example, the approval and reimbursement/settlement processes can be delayed, which can impact accounting tasks and the organizations' entity close processes. Likewise, organizations cannot track expenditures (e.g., of multiple employees) in real-time.

Another technical challenge is scalability, which can manifest in two aspects. In one aspect, some EM solutions offer semi-automatic expense capture functionalities by integrating with existing digital payment platforms using platform-specific application programming interfaces (APIs). However, such an approach lacks scalability because the platform's APIs can change (e.g., due to software upgrade), and the EM solutions are incompatible with new or unknown digital payment platforms. In another aspect, existing EM solutions face the scalability challenges of handling large volumes of expense entries. Each expense entry generally includes multiple fields (e.g., digital payment provider, vendor, payment type, currency, date/time, expense type, etc.). Existing EM solutions usually involve multiple API calls in order to enter (e.g., through user's input) data to these fields. When these fields are manually entered in separate sessions, multiple authentication and communication sessions are required. Thus, large volume of expense entries can have a high demand of computing resources (e.g., memory usage and CPU consumption) and can slow down or even crash the EM systems.

The technologies described herein overcome many of the technical challenges described above by using message-based expense capture and classification. Specifically, an intelligent EM system described herein uses named entity recognition and natural language processing techniques to analyze messages generated by various digital payment platforms. As a result, the intelligent EM system can achieve real-time (or substantially real-time) capture of expenses made in heterogeneous digital payment platforms, automatic validation of expenses, and automatic classification of expense types, thereby improving the efficiency and reliability of EM systems.

### Example 2 - Example Intelligent EM System Supporting Message-Based Expense Capture and Classification

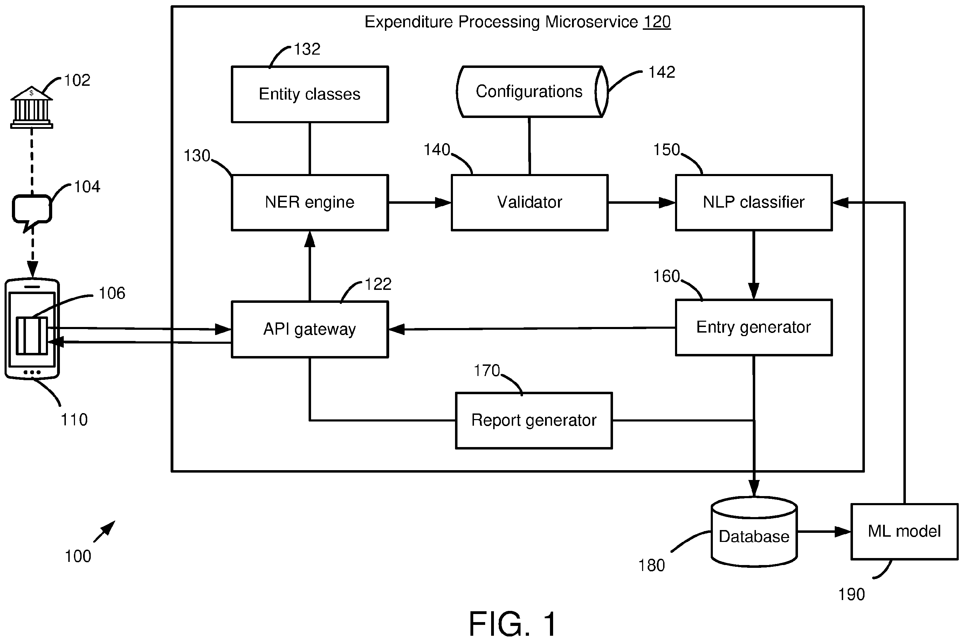

FIG. 1 shows an overall block diagram of an example intelligent EM system 100 supporting message-based expense capture and classification.

As shown in FIG. 1, the intelligent EM system 100 can include an expenditure processing microservice, or EPMS 120. As described herein, microservices are small, independently deployable, and loosely coupled software applications that perform specific functions within a larger enterprise application. Each microservice can be developed, deployed, and scaled independently, promoting flexibility, modularity, and easier maintenance. The microservices can communicate through pre-defined APIs and can be written in different programming languages, allowing for agile development and efficient system architecture. In the depicted example, the EPMS 120 includes an API gateway 122, a named entity recognition (NER) engine 130, a plurality of predefined entity classes 132, a validator 140, user-defined configurations 142, a natural language processing (NLP) classifier 150, an entry generator 160, and a report generator 170.

The EPMS 120 can communicate (e.g., through wireless or wired communication channels) with one or more mobile devices 110 (e.g., smartphones, tablets, etc.). Each mobile device 110 can receive text messages 104 from various sources. For example, after a user of the mobile device 110 makes a purchase using a digital payment platform, a provider 102 of the digital payment platform can send a text message 104 (e.g., via short message service, or SMS) to the mobile device 110 with a summary the purchase (e.g., with information about the vendor, payment type, payment amount, purchase date/time, etc.).

The mobile device 110 can have a mobile application 106 configured to relay the received text message 104, along with the user's identification (ID) information, to the EPMS 120. For example, the mobile application 106 can send the text message 104 and the user's ID to the EPMS 120 via a secure message channel therebetween. To establish the secure message channel, a secure authentication mechanism can be used. For example, the mobile applicant 106 can first send a request to the EPMS 120 (e.g., through HTTPS) with user credentials or an authentication token. The EPMS 120 can verify the credentials (e.g., using OAuth, JWT, or other authentication protocols) and grant access if valid. Once authenticated, the EPMS 120 can generate a unique session token or API key and send it back to the mobile application. Subsequent requests from the mobile application 106 include this token in the request headers, allowing the EPMS 120 to verify the authenticity of the mobile device 110 and grant access to the authorized resources. As shown in FIG. 1, the API gateway 122 of EPMS 120 can be configured to handle communications (including authentication and receiving text messages) with the mobile application 106.

The text message 104 received by the API gateway 122 can be sent to the NER engine 130 for initial processing. A named entity is a specific type of entity in natural language text that has a name and represents a real-world object or concept. Named entities are typically proper nouns and include entities such as names of people, organizations, locations, dates, times, monetary values, etc. For domain-specific applications such as the message-based expense capture and classification described herein, specific verb phrases or action words (e.g., "purchased," "credited," etc.) can also be treated as named entities. Named entity recognition is a natural language processing task that involves identifying and classifying named entities in a given text. The NER engine 130 is configured to recognize and extract relevant named entities from the text message 104 and assign values to predefined entity classes 132 based on the extracted named entities. In some examples, the NER engine 130 can be implemented using machine learning and NLP techniques. In one specific example, the NER engine 130 can identify named entities based on user-defined patterns, e.g., by using regular expressions or rule-based approaches that match specific sequences of words, capitalization, or context to recognize entities like names, dates, or custom domain-specific terms in the text message 104.

In some examples described herein, the predefined entity classes 132 can include the following: "PROVIDER," "AMOUNT," "CARD_NUMBER," "DATE," "CURRENCY," "TRANS_TYPE_DEBITED," etc. An extracted named entity representing a provider of a digital payment platform can be assigned to the "PROVIDER" entity class. An extracted named entity representing an expense amount can be assigned to the "AMOUNT" entity class. An extracted named entity representing the last four digits of a debit or credit card can be assigned to the "CARD_NUMBER" entity class. An extracted named entity representing a date of expense can be assigned to the "DATE" entity class. An extracted named entity representing an expense currency can be assigned to the "CURRENCY" entity class. An extracted named entity indicating an expense event (e.g., if the text message 104 includes any of the words "spent," "spend," "purchased," "purchase," "debited," etc.) can be assigned to the "TRANS_TYPE_DEBITED" entity class. A Boolean variable "IsSpend" can be set to TRUE if a named entity corresponding to the "TRANS_TYPE_DEBITED" entity class is extracted from the text message 104. Otherwise, the value of "IsSpend" can be set to FALSE (e.g., the text message 104 may indicate a credit is given to the user's account, or a security alert sent from a digital payment platform, etc.). It should be understood that the labels for the entity classes 132 described above are merely exemplary. Also, the number of predefined entity classes 132 can be more or less than the ones listed above.

The extracted named entities can be sent to the validator 140 for evaluation. In some examples, the validator 140 first determines if the text message 104 represents an expenditure, e.g., by checking the "IsSpend" variable. If so, the validator 140 then compare selected named entities with pre-registered entity data stored in the configurations 142 to determine if the digital payment method is authorized. For example, the validator 140 can check if the "PROVIDER" and "CARD_NUMBER" match corresponding data that are specified for the user and pre-registered in the configurations 142. On the other hand, the text message 104 will be ignored (and no expenditure entry is created) if the text message 104 does not represent an expenditure or the selected named entities do not match the pre-registered entity data stored in the configurations 142.

After the extracted named entities are successfully validated by the validator 140, the text message 104 can be further processed by the NLP classifier 150, which can use a machine learning (ML) model to classify the text message 104 into one of multiple categories or expense types. Some categories can be predefined, such as "Parking," "Lodging," "Food," etc. If the text message 104 cannot be classified into any of the predefined categories, a new category or expense type (e.g., "Unknown" or "Miscellaneous") can be created, which can be renamed or redefined by the user.

In some examples, the NLP classifier 150 can convert the text message 104 into numerical vectors in a multidimensional space and measure similarities between the numerical vectors. Conversion of the text message 104 into numerical vectors can be performed based on word embeddings, which provide dense vector representations of words in a high-dimensional vector space. Word embeddings capture semantic relationships and contextual information between words based on their co-occurrence patterns in a large corpus of text and enable the representation of text data in a more meaningful and computationally efficient way. Example word embedding algorithms include Word2Vec, GloVe, TF-IDF, etc. The individual word embeddings in a sentence can be combined to form a fixed-length vector representation of the entire sentence, also referred to as "sentence representation." After obtaining sentence representations, similarity measurement techniques can be used to compare the similarity between sentences or documents. Different similarity metrics can be used, such as cosine similarity, Euclidean distance, etc. After the similarity scores between sentences are computed, they can be used as features in text classification ML models. Example classifiers like Support Vector Machines (SVM), Naive Bayes, or deep learning models like Recurrent Neural Networks (RNNs) or Convolutional Neural Networks (CNNs) can be used to learn from the similarity scores and classify the text into different categories.

The entry generator 160 is configured to generate an expenditure entry comprising the plurality of extracted named entities and a category to which the text message 104 is classified into. The generated expenditure entry can be saved into a database 180 for storage. Each expenditure entry in the database 180 can have an identifier for fast retrieval.

The API gateway 122 can receive a notification when a new expenditure entry is generated based on the incoming text message 104. Then, the API gateway 122 can send a response to the mobile application 106. In some examples, the response can be an in-app notification sent through the mobile application 106. In other examples, the response can be in the format of a text message sent through SMS. The response can include the identifier of the expenditure entry. Thus, after receiving the response, the user of the mobile device 110 can access or review the expenditure entry stored in the database 180 by providing the identifier of the expenditure entry (and other authentication information).

The data processing steps performed by the EPMS 120, starting from receiving a text message from the mobile application 106 to transmitting a response to the mobile application 106, can be fully automatic and in real-time or substantially in real-time with minimal processing delay (e.g., less than 1 second). Additionally, each expenditure entry, which can contain multiple fields (e.g., digital payment provider, vendor, payment type, currency, date/time, expense type, etc.), can be created during one communication session (with a single API call) with the mobile application 106.

In some examples, the EPMS 120 can remain in a sleep mode when no text message is being processed. The EPMS 120 can switch from the sleep mode to an active mode after receiving the text message 104 from the mobile application 106 and switch back to the sleep mode after sending the response to the mobile application 106. In the sleep mode, the EPMS 120 consumes minimal resources and remains dormant, ready to be activated on demand. In the active mode, the EPMS 120 can be fully operational, processing requests, and performing its designated tasks. Such mode switching allows efficient resource utilization by activating only the required services when needed, reducing overall system overhead and enabling better scalability and responsiveness in distributed applications.

In some examples, the mobile application 106 can send to the EPMS 120 a plurality of text messages, each of which is transmitted from a respective digital payment platform to the mobile device 110. For example, a user of the mobile device 110 can make several purchases using multiple digital payment platforms. For each purchase, the corresponding digital payment platform can send a text message (including a summary of the purchase) to the mobile device 110, which in turn can send the text message to the EPMS 120 for processing. For each received text message, a corresponding expenditure entry can be generated and stored in the database 180 if the text message is successfully validated by the validator 140. The user can log into the EPMS 120 via a secure portal to review and/or edit the expenditure entries (e.g., adding notes, etc.) stored in the database 180. In some examples, the user can select one or more of the expenditure entries and generate an expenditure report comprising the selected one or more of the expenditure entries. Unselected expenditure entries (e.g., representing personal expenses that are unrelated to a business trip, etc.) are not included in the expenditure report. Selection of expenditure entries and generation of the expenditure report can be performed by the report generator 170. The generated expenditure report can then be submitted for approval or other EM processes.

In some examples, the expenditure entries stored in the database 180 can be submitted for a quality check. For example, a newly generated expenditure entry can be reviewed and/or validated offline to determine if the text message 104 is properly classified. After confirming that the text message 104 is properly classified, the text message 104 and the category to which the text message is classified into can be used to train a ML model 190. The trained ML model 190 can be incorporated into or update the NLP classifier 150.

The system components shown in FIG. 1 can be configured in a number of different ways. For example, while FIG. 1 shows that the database 180 and the ML model 190 are outside of the EPMS 120, in other examples, the database 180 and/or the ML model 190 can be part(s) of the EPMS 120. As another example, the report generator 170 can be external to the EPMS 120 in some implementations.

In practice, the systems shown herein, such as the computing system 100, can vary in complexity, with additional functionality, more complex components, and the like. For example, there can be additional functionality within the EPMS 120. Additional components can be included to implement security, redundancy, load balancing, report design, and the like.

The described computing systems can be networked via wired or wireless network connections, including the Internet. Alternatively, systems can be connected through an intranet connection (e.g., in a corporate environment, government environment, or the like).

The system 100 and any of the other systems described herein can be implemented in conjunction with any of the hardware components described herein, such as the computing systems described below (e.g., processing units, memory, and the like). In any of the examples herein, the text messages, named entities, expenditure entries, and the like can be stored in one or more computer-readable storage media or computer-readable storage devices. The technologies described herein can be generic to the specifics of operating systems or hardware and can be applied in any variety of environments to take advantage of the described features.

### Example 3 - Example Overall Method for Implementing Message-Based Expense Capture and Classification

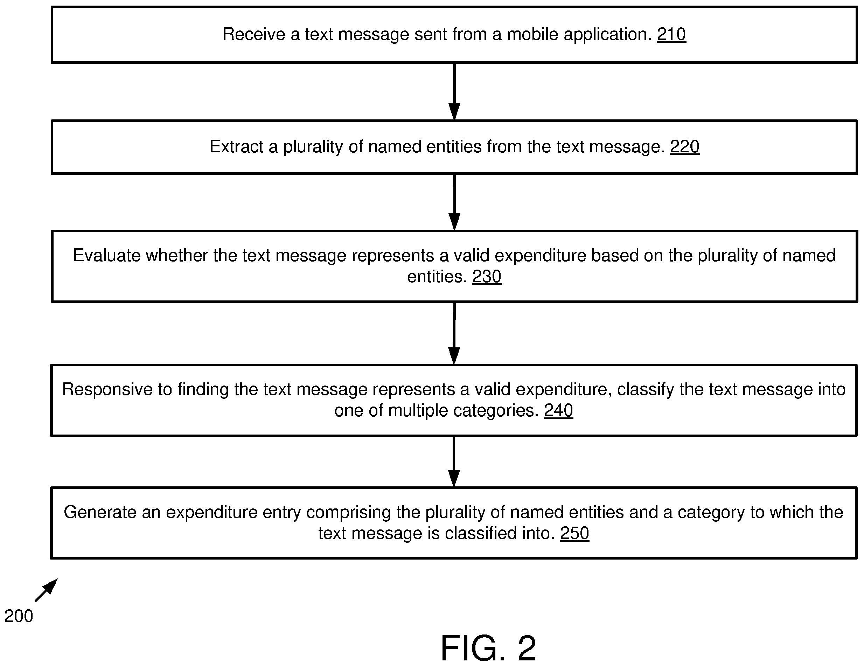

FIG. 2 is a flowchart illustrating an example overall method 200 for implementing message-based expense capture and classification, and can be performed by a microservice such as the EPMS 120 of FIG. 1.

At step 210, the microservice can receive a text message sent from a mobile application.

At step 220, the microservice can extract a plurality of named entities from the text message (e.g., by analyzing the text message using the NER engine 130).

At step 230, the microservice can evaluate whether the text message represents a valid expenditure based on the plurality of named entities (e.g., by evaluating the extracted named entities using the validator 140).

At step 240, responsive to finding that the text message represents a valid expenditure, the microservice can classify the text message into one of multiple categories (e.g., using the NLP classifier 150).

At step 250, the microservice can generate an expenditure entry including the plurality of named entities and a category to which the text message is classified into (e.g., using the entry generator 160).

Optionally, as described above, the microservice can then send a response (including an identifier of the expenditure entry) to the mobile application.

The method 200 and any of the other methods described herein can be performed by computer-executable instructions (e.g., causing a computing system to perform the method) stored in one or more computer-readable media (e.g., storage or other tangible media) or stored in one or more computer-readable storage devices. Such methods can be performed in software, firmware, hardware, or combinations thereof. Such methods can be performed at least in part by a computing system (e.g., one or more computing devices).

The illustrated actions can be described from alternative perspectives while still implementing the technologies. For example, "send" can also be described as "receive" from a different perspective.

### Example 4 - Example Process Flow of Message-Based Expense Capture and Classification

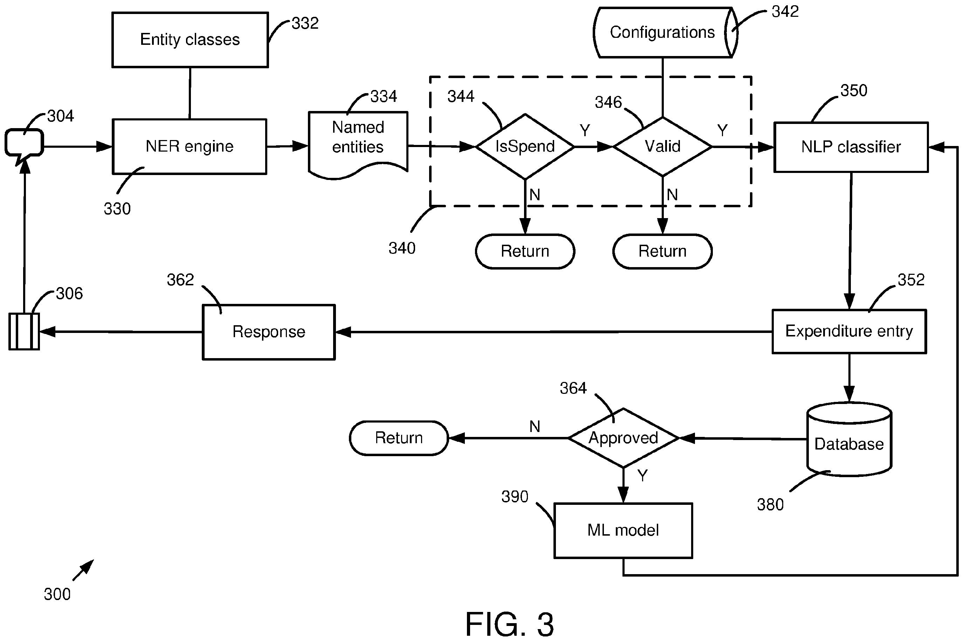

FIG. 3 shows a flow diagram depicting an example process 300 of message-based expense capture and classification, and can be performed by a computing system 100 depicted in FIG. 1. The components shown in FIG. 3 (e.g., the NER engine 330, the entity classes 332, the validator 340, the configurations 342, the NLP classifier 350, the database 380, the ML model 390, etc.) correspond to respective components (e.g., 130, 132, 140, 142, 150, 180, 190, etc.) shown in FIG. 1.

The process 300 starts when a text message 304 sent from a mobile application 306 is received by the NER engine 330, which can extract a plurality of named entities 334 from the text message 304 and assign values to predefined entity classes 332 based on the extracted named entities 334. As discussed above, the extracted named entities can be assigned to the following entity classes: "PROVIDER," "AMOUNT," "CARD_NUMBER," "DATE," "CURRENCY," "TRANS_TYPE_DEBITED," etc. A Boolean variable "IsSpend" can be derived based on whether a named entity corresponding to the "TRANS_TYPE_DEBITED" entity class is extracted from the text message 304.

The extracted named entities 334 can be evaluated by the validator 340. A first stage 344 of the validator 340 determines if the text message 304 represents an expenditure, e.g., by checking the value of the "IsSpend" variable. If the test message 304 does not represent an expenditure (e.g., "IsSpend" is FALSE), the process 300 will return or abort. Otherwise (e.g., "IsSpend" is TRUE), the evaluation can move to a second stage 346, where selected named entities 334 can be compared with pre-registered entity data stored in the configurations 342 to determine if the digital payment method is authorized. For example, if both the values of "PROVIDER" and "CARD_NUMBER" match corresponding pre-registered entity data in the configurations 342, the text message 304 can be deemed to represent a valid expenditure. Otherwise, the process 300 will return or abort.

After successful validation by the validator 340, the text message 304 can be sent to the NLP classifier 350, which can classify the text message 304 into one of multiple categories or expense types.

The output of the NLP classifier 350 can include a newly generated expenditure entry 352 comprising the extracted named entities 334 and a category to which the text message 304 is classified into. The newly generated expenditure entry 352 can be saved in the database 380. Additionally, a response 362 can be sent to the mobile application 306. The response 362 can include an identifier of and/or a link to the newly generated expenditure entry.

Each expenditure entry stored in the database 380 can be submitted for a quality check at step 364 to determine if the corresponding text message is properly classified. After confirming that the text message is properly classified, the text message and the category to which the text message is classified into can be used to train the ML model 390, which can be incorporated into or update the NLP classifier 350.

### Example 5 - Example Use Case

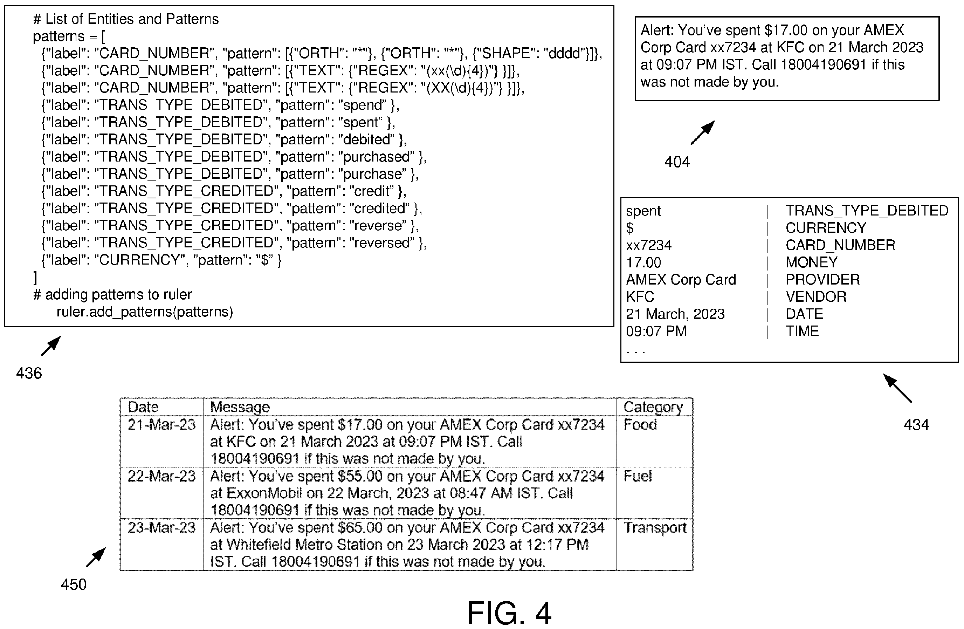

FIG. 4 depicts an example use case of extracting named entities from a text message 404 which reads: "Alert: You've spent $17.00 on your AMEX Corp Card xx7234 at KFC on 21 March 2023 at 09:07 PM IST. Call 18004190691 if this was not made by you."

In the depicted example, extraction of named entity is performed by using SpaCy, which is an open-source NLP library used for text processing tasks. Specifically, named entity recognition in SpaCy can be implemented using rule-based matching through its "Matcher" class. The Matcher allows defining custom patterns using a combination of linguistic features, regular expressions, and token attributes. These patterns can represent specific entities or phrases of interest. The Matcher then efficiently searches the text for occurrences that match these defined patterns, enabling the identification and extraction of named entities based on user-defined rules.

FIG. 4 shows a part of software code 436 which defines custom patterns for several entity classes including "CARD_NUMBER," "TRANS_TYPE_DEBITED," "TRANS_TYPE_CREDITED," and "CURRENCY." Each custom pattern can include a label (e.g., "CARD_NUMBER") of the entity class and a character sequence pattern (e.g., [{"ORTH": "*"}, {"ORTH": "*"}, {"SHAPE": "dddd"}]). For example, the character sequence pattern {"SHAPE": "dddd"} indicates four consecutive digits or decimal numbers. In the depicted example, three custom patterns are defined to cover different variations of the last four digits of a card number (e.g., **1234, xx1234, XX1234, etc.). Default SpaCy settings can be used to extract named entities for other entity classes such as "PROVIDER," "VENDOR," "DATE," and "AMOUNT."

The Boolean value assigned to the variable "IsSpend" can be determined based on whether there is an extracted named entity corresponding to the "TRANS_TYPE_DEBITED" entity class. If so, the value of "IsSpend" can be set to TRUE. Otherwise, the value of "IsSpend" can be set to FALSE.

FIG. 4 also shows the results 434 of named entity recognition. The right column shows the labels of entity classes (including default entity classes and custom defined entity classes), and the left column shows the extracted named entities corresponding to the respective entity classes. In this example, "spent" is an extracted named entity corresponding to the "TRANS_TYPE_DEBITED" entity class (thus, "IsSpend" will be assigned TRUE), "$" is an extracted named entity corresponding to the "CURRENCY" entity class, "xx7234" is an extracted named entity corresponding to the "CARD_NUMBER" entity class, etc.

FIG. 4 also shows classification results 450 (e.g., performed by the NLP classifier 150 or 350) for three example text messages. As shown, the first text message (the same message as 404) is classified into a "Food" category (or expense type), the second text message is classified into a "Fuel" category (or expense type), and the third text message is classified into a "Transport" category (or expense type). As described above, three expenditure entries can be respectively generated from the three text messages. Each expenditure entry can include named entities extracted from the respective text message and the corresponding category (or expense type). A user can select some or all of the expenditure entries to generate an expenditure report.

### Example 6 - Example Advantages

A number of advantages can be achieved via the technologies described herein.

As described above, existing EM solutions generally cannot capture, in real-time, expenditures made on digital payment platforms. Thus, they must rely on users to manually create expenditure entries when they make digital payments. The message-based expense capture and classification technologies described herein can automatically and accurately capture expenditures made on digital payment platforms in real-time (or substantially real-time). As a result, users can track and monitor their expenditures on the go, and organizations can streamline their EM process.

Further, the technologies described herein improve the scalability of EM process. In one aspect, the message-based expense capture and classification technologies described herein allows seamless integration with heterogenous digital payment platforms, avoiding the need of separate integrations with each digital payment platform by calling platform-specific APIs. In another aspect, in contrast to the conventional EM solutions which would require multiple communication sessions with multiple API calls to complete one expenditure entry, the message-based expense capture and classification technologies described herein can automatically complete an expenditure entry in one communication session with a single API call. As a result, the technologies described herein can substantially reduce the demand for computing resources (e.g., memory usage and CPU consumption) when handling large volumes of expense entries.

### Example 7 - Example Computing Systems

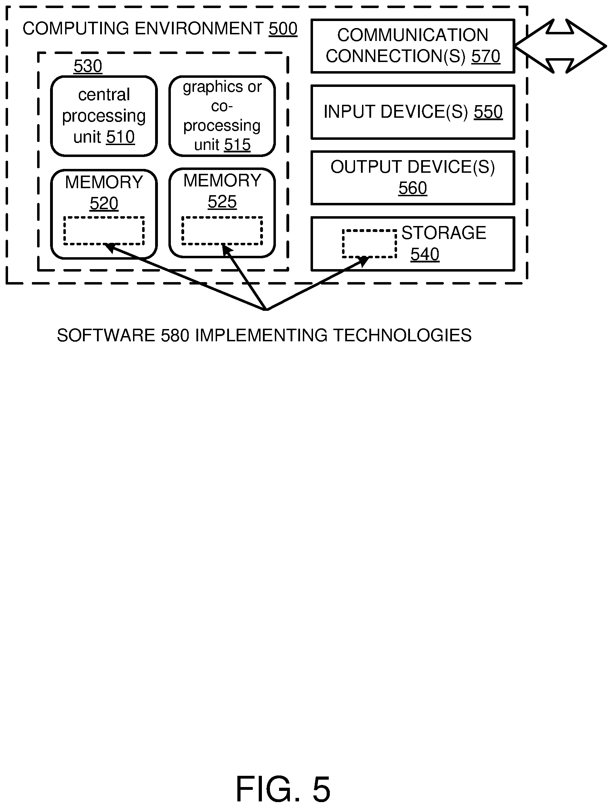

FIG. 5 depicts an example of a suitable computing system 500 in which the described innovations can be implemented. The computing system 500 is not intended to suggest any limitation as to scope of use or functionality of the present disclosure, as the innovations can be implemented in diverse computing systems.

With reference to FIG. 5, the computing system 500 includes one or more processing units 510, 515 and memory 520, 525. In FIG. 5, this basic configuration 530 is included within a dashed line. The processing units 510, 515 can execute computer-executable instructions, such as for implementing the features described in the examples herein (e.g., the method 200). A processing unit can be a general-purpose central processing unit (CPU), processor in an application-specific integrated circuit (ASIC), or any other type of processor. In a multi-processing system, multiple processing units can execute computer-executable instructions to increase processing power. For example, FIG. 5 shows a central processing unit 510 as well as a graphics processing unit or co-processing unit 515. The tangible memory 520, 525 can be volatile memory (e.g., registers, cache, RAM), non-volatile memory (e.g., ROM, EEPROM, flash memory, etc.), or some combination of the two, accessible by the processing unit(s) 510, 515. The memory 520, 525 can store software 580 implementing one or more innovations described herein, in the form of computer-executable instructions suitable for execution by the processing unit(s) 510, 515.

A computing system 500 can have additional features. For example, the computing system 500 can include storage 540, one or more input devices 550, one or more output devices 560, and one or more communication connections 570, including input devices, output devices, and communication connections for interacting with a user. An interconnection mechanism (not shown) such as a bus, controller, or network can interconnect the components of the computing system 500. Typically, operating system software (not shown) can provide an operating environment for other software executing in the computing system 500, and coordinate activities of the components of the computing system 500.

The tangible storage 540 can be removable or non-removable, and includes magnetic disks, magnetic tapes or cassettes, CD-ROMs, DVDs, or any other medium which can be used to store information in a non-transitory way and which can be accessed within the computing system 500. The storage 540 can store instructions for the software implementing one or more innovations described herein.

The input device(s) 550 can be an input device such as a keyboard, mouse, pen, or trackball, a voice input device, a scanning device, touch device (e.g., touchpad, display, or the like) or another device that provides input to the computing system 500. The output device(s) 560 can be a display, printer, speaker, CD-writer, or another device that provides output from the computing system 500.

The communication connection(s) 570 can enable communication over a communication medium to another computing entity. The communication medium can convey information such as computer-executable instructions, audio or video input or output, or other data in a modulated data signal. A modulated data signal is a signal that has one or more of its characteristics set or changed in such a manner as to encode information in the signal. By way of example, and not limitation, communication media can use an electrical, optical, RF, or other carrier.

The innovations can be described in the context of computer-executable instructions, such as those included in program modules, being executed in a computing system on a target real or virtual processor (e.g., which is ultimately executed on one or more hardware processors). Generally, program modules or components can include routines, programs, libraries, objects, classes, components, data structures, etc. that perform particular tasks or implement particular abstract data types. The functionality of the program modules can be combined or split between program modules as desired in various embodiments. Computer-executable instructions for program modules can be executed within a local or distributed computing system.

For the sake of presentation, the detailed description uses terms like "determine" and "use" to describe computer operations in a computing system. These terms are high-level descriptions for operations performed by a computer and should not be confused with acts performed by a human being. The actual computer operations corresponding to these terms vary depending on implementation.

### Example 8 - Computer-Readable Media

Any of the computer-readable media herein can be non-transitory (e.g., volatile memory such as DRAM or SRAM, nonvolatile memory such as magnetic storage, optical storage, or the like) and/or tangible. Any of the storing actions described herein can be implemented by storing in one or more computer-readable media (e.g., computer-readable storage media or other tangible media). Any of the things (e.g., data created and used during implementation) described as stored can be stored in one or more computer-readable media (e.g., computer-readable storage media or other tangible media). Computer-readable media can be limited to implementations not consisting of a signal.

Any of the methods described herein can be implemented by computer-executable instructions in (e.g., stored on, encoded on, or the like) one or more computer-readable media (e.g., computer-readable storage media or other tangible media) or one or more computer-readable storage devices (e.g., memory, magnetic storage, optical storage, or the like). Such instructions can cause a computing device to perform the method. The technologies described herein can be implemented in a variety of programming languages.

### Example 9 - Example Cloud Computing Environment

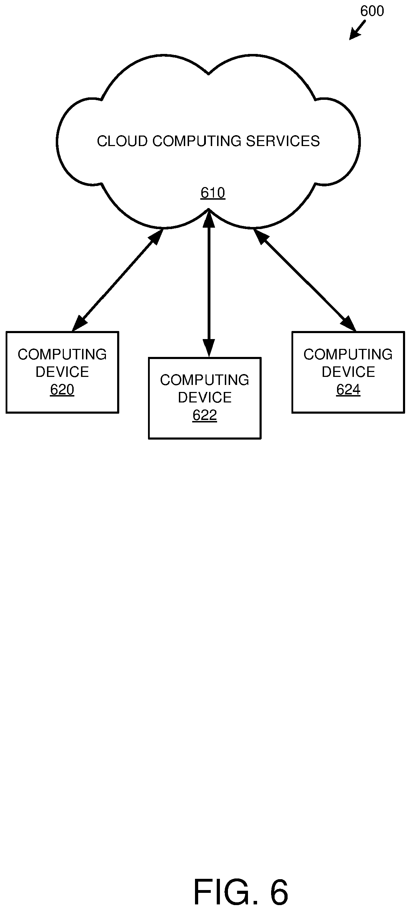

FIG. 6 depicts an example cloud computing environment 600 in which the described technologies can be implemented, including, e.g., the system 100 and other systems herein. The cloud computing environment 600 can include cloud computing services 610. The cloud computing services 610 can comprise various types of cloud computing resources, such as computer servers, data storage repositories, networking resources, etc. The cloud computing services 610 can be centrally located (e.g., provided by a data center of a business or organization) or distributed (e.g., provided by various computing resources located at different locations, such as different data centers and/or located in different cities or countries).

The cloud computing services 610 can be utilized by various types of computing devices (e.g., client computing devices), such as computing devices 620, 622, and 624. For example, the computing devices (e.g., 620, 622, and 624) can be computers (e.g., desktop or laptop computers), mobile devices (e.g., tablet computers or smart phones), or other types of computing devices. For example, the computing devices (e.g., 620, 622, and 624) can utilize the cloud computing services 610 to perform computing operations (e.g., data processing, data storage, and the like).

In practice, cloud-based, on-premises-based, or hybrid scenarios can be supported.

### Example 10 - Example Implementations

Although the operations of some of the disclosed methods are described in a particular, sequential order for convenient presentation, such manner of description encompasses rearrangement, unless a particular ordering is required by specific language set forth herein. For example, operations described sequentially can in some cases be rearranged or performed concurrently.

As described in this application and in the claims, the singular forms "a," "an," and "the" include the plural forms unless the context clearly dictates otherwise. Additionally, the term "includes" means "comprises." Further, "and/or" means "and" or "or," as well as "and" and "or."

### Example 11 - Example Embodiments

Any of the following example clauses can be implemented.

Clause 1. A computer-implemented method comprising: receiving, by a microservice, a text message sent from a mobile application; extracting, by the microservice, a plurality of named entities from the text message; evaluating, by the microservice, based on the plurality of named entities, whether the text message represents a valid expenditure; responsive to finding that the text message represents a valid expenditure, classifying, by the microservice, the text message into one of multiple categories; and generating, by the microservice, an expenditure entry comprising the plurality of named entities and a category to which the text message is classified into.

Clause 2. The method of clause 1, wherein the text message is one of a plurality of text messages and the expenditure entry is one of a plurality of expenditure entries generated from the plurality of text messages, wherein the method further comprises selecting one or more of the expenditure entries and generating a report comprising the selected one or more of the expenditure entries.

Clause 3. The method of any one of clauses 1-2, further comprising: sending, from the microservice, a response to the mobile application, wherein the response comprises an identifier of the expenditure entry.

Clause 4. The method of clause 3, wherein the microservice switches from a sleep mode to an active mode after receiving the text message from the mobile application and switch back to the sleep mode after sending the response to the mobile application.

Clause 5. The method of any one of clauses 1-4, wherein the extracting comprises identifying words in the text message corresponding to predefined entity classes.

Clause 6. The method of clause 5, further comprising defining a character sequence pattern and a label for at least one entity class.

Clause 7. The method of clause 6, wherein the character sequence pattern for the at least one entity class represents multiple consecutive decimal numbers.

Clause 8. The method of any one of clauses 1-7, wherein the evaluating comprises comparing the plurality of named entities with pre-registered entity data.

Clause 9. The method of any one of clauses 1-8, wherein the classifying comprises converting the text message into numerical vectors in a multidimensional space and measuring similarities between the numerical vectors.

Clause 10. The method of any one of clauses 1-9, further comprising training a machine learning model using the text message and the category to which the text message is classified into.

Clause 11. A computing system, comprising: memory; one or more hardware processors coupled to the memory; and one or more computer readable storage media storing instructions that, when loaded into the memory, cause the one or more hardware processors to perform operations comprising: receiving, by a microservice, a text message sent from a mobile application; extracting, by the microservice, a plurality of named entities from the text message; evaluating, by the microservice, based on the plurality of named entities, whether the text message represents a valid expenditure; responsive to finding that the text message represents a valid expenditure, classifying, by the microservice, the text message into one of multiple categories; and generating, by the microservice, an expenditure entry comprising the plurality of named entities and a category to which the text message is classified into.

Clause 12. The system of clause 11, wherein the text message is one of a plurality of text messages and the expenditure entry is one of a plurality of expenditure entries generated from the plurality of text messages, wherein the operations further comprise selecting one or more of the expenditure entries and generating a report comprising the selected one or more of the expenditure entries.

Clause 13. The system of any one of clauses 11-12, wherein the operations further comprise: sending, from the microservice, a response to the mobile application, wherein the response comprises an identifier of the expenditure entry.

Clause 14. The system of clause 13, wherein the microservice switches from a sleep mode to an active mode after receiving the text message from the mobile application and switch back to the sleep mode after sending the response to the mobile application.

Clause 15. The system of any one of clauses 11-14, wherein the extracting comprises identifying words in the text message corresponding to predefined entity classes.

Clause 16. The system of clause 15, wherein the operations further comprise defining a character sequence pattern and a label for at least one entity class.

Clause 17. The system of any one of clauses 11-16, wherein the evaluating comprises comparing the plurality of named entities with pre-registered entity data.

Clause 18. The system of any one of clauses 11-17, wherein the classifying comprises converting the text message into numerical vectors in a multidimensional space and measuring similarities between the numerical vectors.

Clause 19. The system of any one of clauses 11-18, wherein the operations further comprise training a machine learning model using the text message and the category to which the text message is classified into.

Clause 20. One or more non-transitory computer-readable media having encoded thereon computer-executable instructions causing one or more processors to perform a method comprising: receiving, by a microservice, a text message sent from a mobile application; extracting, by the microservice, a plurality of named entities from the text message; evaluating, by the microservice, based on the plurality of named entities, whether the text message represents a valid expenditure; responsive to finding that the text message represents a valid expenditure, classifying, by the microservice, the text message into one of multiple categories; generating, by the microservice, an expenditure entry comprising the plurality of named entities and a category to which the text message is classified into; and sending, from the microservice, a response to the mobile application, wherein the response comprises an identifier of the expenditure entry, wherein the extracting comprises identifying words in the text message corresponding to predefined entity classes.

### Example 12 - Example Alternatives

The technologies from any example can be combined with the technologies described in any one or more of the other examples. In view of the many possible embodiments to which the principles of the disclosed technology can be applied, it should be recognized that the illustrated embodiments are examples of the disclosed technology and should not be taken as a limitation on the scope of the disclosed technology. Rather, the scope of the disclosed technology includes what is covered by the scope and spirit of the following claims.

## Claims

1. A computer-implemented method comprising:
receiving, by a microservice, a text message sent from a mobile application;
extracting, by the microservice, a plurality of named entities from the text message;
evaluating, by the microservice, based on the plurality of named entities, whether the text message represents a valid expenditure;
responsive to finding that the text message represents a valid expenditure, classifying, by the microservice, the text message into one of multiple categories; and
generating, by the microservice, an expenditure entry comprising the plurality of named entities and a category to which the text message is classified into.

2. The method of claim 1, wherein the text message is one of a plurality of text messages and the expenditure entry is one of a plurality of expenditure entries generated from the plurality of text messages, wherein the method further comprises selecting one or more of the expenditure entries and generating a report comprising the selected one or more of the expenditure entries.

3. The method of claim 1 or 2, further comprising:
sending, from the microservice, a response to the mobile application, wherein the response comprises an identifier of the expenditure entry;
wherein, optionally, the microservice switches from a sleep mode to an active mode after receiving the text message from the mobile application and switch back to the sleep mode after sending the response to the mobile application.

4. The method of any one of claims 1 to 3, wherein the extracting comprises identifying words in the text message corresponding to predefined entity classes.

5. The method of claim 4, further comprising defining a character sequence pattern and a label for at least one entity class;
wherein, optionally, the character sequence pattern for the at least one entity class represents multiple consecutive decimal numbers.

6. The method of any one of claims 1 to 5, wherein the evaluating comprises comparing the plurality of named entities with pre-registered entity data; and/or
wherein the classifying comprises converting the text message into numerical vectors in a multidimensional space and measuring similarities between the numerical vectors.

7. The method of any one of claims 1 to 6, further comprising training a machine learning model using the text message and the category to which the text message is classified into.

8. A computing system, comprising:
memory;
one or more hardware processors coupled to the memory; and
one or more computer readable storage media storing instructions that, when loaded into the memory, cause the one or more hardware processors to perform operations comprising:
receiving, by a microservice, a text message sent from a mobile application;
extracting, by the microservice, a plurality of named entities from the text message;
evaluating, by the microservice, based on the plurality of named entities, whether the text message represents a valid expenditure;
responsive to finding that the text message represents a valid expenditure, classifying, by the microservice, the text message into one of multiple categories; and
generating, by the microservice, an expenditure entry comprising the plurality of named entities and a category to which the text message is classified into.

9. The system of claim 8, wherein the text message is one of a plurality of text messages and the expenditure entry is one of a plurality of expenditure entries generated from the plurality of text messages, wherein the operations further comprise selecting one or more of the expenditure entries and generating a report comprising the selected one or more of the expenditure entries.

10. The system of claim 8 or 9, wherein the operations further comprise:
sending, from the microservice, a response to the mobile application, wherein the response comprises an identifier of the expenditure entry;
wherein, optionally, the microservice switches from a sleep mode to an active mode after receiving the text message from the mobile application and switch back to the sleep mode after sending the response to the mobile application.

11. The system of any one of claims 8 to 10, wherein the extracting comprises identifying words in the text message corresponding to predefined entity classes.

12. The system of claim 11, wherein the operations further comprise defining a character sequence pattern and a label for at least one entity class.

13. The system of any one of claims 8 to 12, wherein the evaluating comprises comparing the plurality of named entities with pre-registered entity data; and /or
wherein, optionally, the classifying comprises converting the text message into numerical vectors in a multidimensional space and measuring similarities between the numerical vectors.

14. The system of any one of claims 8 to 13, wherein the operations further comprise training a machine learning model using the text message and the category to which the text message is classified into.

15. One or more non-transitory computer-readable media having encoded thereon computer-executable instructions causing one or more processors to perform a method comprising:
receiving, by a microservice, a text message sent from a mobile application;
extracting, by the microservice, a plurality of named entities from the text message;
evaluating, by the microservice, based on the plurality of named entities, whether the text message represents a valid expenditure;
responsive to finding that the text message represents a valid expenditure, classifying, by the microservice, the text message into one of multiple categories;
generating, by the microservice, an expenditure entry comprising the plurality of named entities and a category to which the text message is classified into; and
sending, from the microservice, a response to the mobile application, wherein the response comprises an identifier of the expenditure entry,
wherein the extracting comprises identifying words in the text message corresponding to predefined entity classes.
